Europäisches Patentamt

European Patent Office

Office européen des brevets

(19)

(11) Veröffentlichungsnummer: **0 381 950**
**A2**

(12) **EUROPÄISCHE PATENTANMELDUNG**

(21) Anmeldenummer: **90100803.7**

(22) Anmeldetag: **16.01.90**

(51) Int. Cl.⁵: **D06N 3/04, C08L 33/00, C08J 5/00**

(30) Priorität: **08.02.89 DE 3903670**

(43) Veröffentlichungstag der Anmeldung:
**16.08.90 Patentblatt 90/33**

(84) Benannte Vertragsstaaten:
**BE DE FR GB LU NL SE**

(71) Anmelder: **Pegulan-Werke AG**
**Foltzring 35**
**D-6710 Frankenthal/Pfalz(DE)**

(72) Erfinder: **Dürkop, Joachim, Dr.**
**Blumenwiese 9**
**D-5503 Konz-Niedermenning(DE)**
Erfinder: **Oppermann, Horst**
**Waldstrasse 16**
**D-5501 Pellingen(DE)**
Erfinder: **Blass Reinhold**
**Hauptstrasse 81**
**D-5511 Ockfen(DE)**

(74) Vertreter: **Grussdorf, Jürgen, Dr. et al**
**Patentanwälte Zellentin & Partner**
**Rubensstrasse 30**
**D-6700 Ludwigshafen(DE)**

(54) **Kalandrierte Bodenbeläge aus Polymethylmethacrylaten.**

(57) Die vorliegende Erfindung betrifft kalandrierte Bodenbeläge aus Polymethylmethacrylaten, bestehend aus einer Mischung von a) 100 Teilen Emulsionspolymerisat aus Methylmethacrylat, b) 0-150 Teilen Suspensionspolymerisat aus Methylmethacrylat,c) 20-60 % von einem oder mehreren Weichmachern und d) 0 - 100 % Hilfsstoffen, wobei die Menge von c) und d) auf die Gesamtmenge von a) und b) bezogen ist, sowie Verfahren zu ihrer Herstellung.

**Fig.1**

EP 0 381 950 A2

## Kalandrierte Bodenbeläge aus Polymethylmethacrylaten

Die Erfindung betrifft neuartige kalandrierte Bodenbeläge aus Polymethylmethacrylaten, Weichmachern und gegebenenfalls Hilfsstoffen, sowie Verfahren zur ihrer Herstellung.

Kunststoffbodenbeläge finden heute in großem Umfang Verwendung aufgrund ihrer vielfältigen dekorativen Möglichkeiten, einfacher Verlegung, weitgehende Beständigkeit gegen Abnutzung und leichten Pflegbarkeit.

Der Markt bzw. Marktsegmente und einzelne Kommunen verlangen heute einen PVC-freien Bodenbelag.

Solche Beläge existieren zwar in Form von Linoleum und Gummi-Belägen, jedoch erfüllen diese Beläge nur einen Teil der Palette der PVC-Qualitäten und Eigenschaften. Aufgrund ihrer mangelhaften Wirtschaftlichkeit und im Falle des Linoleums schwierigen Herstellbarkeit und schlechter Handhabung aufgrund ihrer Eigenschaften, werden diese Produkte im wesentlichen durch Bodenbeläge aus PVC oder PVC-haltigen Mischungen ersetzt.

Um sowohl dem Wunsch des Marktes als auch der nötigen Wirtschaftlichkeit und Gebrauchsfähigkeit des Produktes Rechnung zu traggen, stellt sich daher die Aufgabe, Bodenbeläge zu entwickeln, welche frei von PVC sind, jedoch in den Eigenschaften mit dem PVC-Belag konkurrieren können. Ganz wesentlich ist, daß solche Beläge auf dem vorhandenen, sehr teuren Maschinenpark der PVC-Fußboden-Hersteller verarbeitbar sein müssen.

Die Lösung dieser Aufgabe ist durch die in den Patentansprüchen näher gekennzeichneten Merkmale möglich.

Es ist bereits bekannt, daß man auf einen Bodenbelag, beispielsweise aus PVC eine Trittschicht aus Acrylatpolymeren aufbringen kann, indem man entweder eine Organosollösung oder eine wäßrige Dispersion des Acrylats als Schicht aufbringt und das Lösungsmittel heraustrocknet (z.B. EP-A 0174643).

Plastisole aus Copolymerisaten von Methylmethacrylat und geeigneten Weichmachern sind ferner als Überzugsmittel für Metalle bekannt (DE-C 25 43 542, DE-C 31 39 090 und DE-C 27 22 752). In der DE-C 24 54 235 sind ferner Plastisole auf Acrylatbasis, bestehend aus Methylmethacrylatcopolymerisaten und/oder Methacrylsäureestern von $C_2$-$C_{10}$-Alkoholen bekannt, welche in Mischung mit organischen Weichmachern, inerten Füllstoffen und gegebenenfalls Haftvermittlern als Korrosisons- und Abriebschutz für Stahlbleche als Abdichtungsmittel als Metallkleber und als Beschichtungsmasse Verwendung finden sollen. Ferner wird die Eignung zum Imprägnieren und Beschichten von Textilien, Fußbodenbelägen, Teppichrükken etc. beschrieben. Neben der Verwendung als Dichtungsmaterialien sollen solche Mischungen auch zur Herstellung von Spielzeug, technischen Teilen und zum Walzen von Folien und Bändern geeignet sein. Eine Nacharbeitung der in dieser Schrift beschriebenen Rezepturen zeigt, daß solche Mittel sich zwar als Überzugsstoffe eignen, jedoch als Hauptbestandteil eines Bodenbelages nicht geeignet sind, da sie aufgrund der verwendeten Weichmacher und Polymeren auch nach längerer Trocknungszeit und Beimischung von inerten Füllstoffen eine klebrige Oberfläche behalten. Aus solchem Material hergestellte Bahnen können daher weder aufgerollt und gelagert werden, noch sind sie als Bodenbelag geeignet, da sie Schmutz anziehen und die Laufeigenschaften durch den ausgeschwitzten Weichmacher für eine normale Benutzung nicht ausreichend sind.

Überraschenderweise hat sich nunmehr herausgestellt, daß durch die einfache Maßnahme als Polymeres ein aus einer Emulsion hergestelltes sprühgetrocknetes Polymethylmethacrylat einzusetzen, hervorragende Bodenbeläge ohne Einschränkung des Gebrauchsverhaltens hergestellt werden können.

Unter Emulsionspolymerisat wird dabei ein Produkt verstanden, bei dem die Monomeren zunächst in einer geeigneten wäßrigen Phase bis zu einer Emulsion, d.h. einer Tropfengröße von 0,1-50 $\mu$m, verteilt werden und anschließend in dieser Form durchpolymerisiert werden. Vorzugsweise wird ein Polymerisat mit Teilchen einer Korngröße von etwa 1-10 $\mu$m Durchmesser eingesetzt, welche sich ihrerseits zu größeren Aggregaten mit mittleren Durchmessern von 50-100 $\mu$m zusammenlagern.

Unter Suspensionspolymerisat wird ein entsprechendes Produkt verstanden, bei dem die Monomeren bis zu einer Tropfengröße von ca. 50 bis 200 $\mu$m zerteilt werden und in dieser Form zu Kunststoffperlen polymerisiert werden. Methoden zur Herstellung solcher Produkte, welche als Lackrohstoffe in großer Menge verwendet werden, sind in der Literatur bekannt.

Beim Vermischen der vorgenannten Komponenten mit geeigneten Mengen eines Weichmachers, lassen sich auf Kalandern zu Bahnen verarbeitbare Dryblends herstellen, welche in gleicher Weise und auf den gleichen Kalander-Maschinen verarbeitet werden können, wie die bekannten Dryblends auf Basis von PVC, so daß für die Verarbeitung der neuartigen Bodenbeläge keine zusätzlichen Investitionen erforderlich sind.

Es hat sich allerdings gezeigt, daß eine Reihe von Weichmachern, welche bei der Herstellung von PVC-Bodenbelägen erfolgreich verwendet werden, für die Herstellung der erfindungsgemäßen Bodenbeläge nicht oder nur schlecht geeignet sind. Mit solchen Weichmachern hergestellte Mischungen bilden entweder keine verarbeitbaren Dryblends oder hinterlassen nach dem Gelieren klebrige, nicht begeh- oder wickelfähige Oberflächen oder bewirken unter Lichteinfluß eine Oxidation. Zu den nicht oder wenig geeigneten Weichmachern gehören beispielsweise Dioctylphthalat, Diisononylphthalat und Diisodecylphthalat sowie lineare höher Alkylphthalate, Sebacate und andere aliphatische Mono- und Dicarbonsäureester und einige andere Lösungsmittel, welche insbesondere als Polymerweichmacher für PVC weit verbreitet sind.

Als geeignete Weichmacher haben sich beispielsweise Niederalkylphthalate, insbesondere Methyl-, Ethyl-, Propyl- und Butylphthalat, Benzylalkylphthalate wie Benzyloctylphthalat, Alkoxialkylphthalate, verschiedene Alkylphosphate, aromatische Phosphate, Citronensäureester, Carbamidweichharze und Benzoesäureester erwiesen. Die Eignung anderer Weichmacher soll durch diese Aufzählung jedoch nicht ausgeschlossen sein und läßt sich durch einen einfachen Mischungsversuch leicht feststellen. Die Auswahlkriterien entsprechen denen die für andere Kalander Dryblends bekannt sind, d.h. Weichmacher, Füllstoff und Polymere der Mischung müssen so ausgewählt sein, daß die Mischung einerseits kalandrierbar ist, andererseits trockene, klebfreie Beläge entstehen, welche gute Flexibilität und Festigkeit aufweisen.

Bis zu 50 % der Weichmacher können ferner durch monomere bzw. vernetzbare Methacrylsäureester, insbesondere Methylmethacrylat, zusammen mit einem geeigneten bekannten Härter ersetzt werden.

Die Mischung kann ferner 0-100 Gew.-% inerte Hilfsstoffe bezogen auf die Gesamtmenge der eingesetzten Polymethylmethacrylate enthalten, die die Abriebfestigkeit der daraus hergestellten Bodenbeläge verbessern. Geeignete Füllstoffe sind z.B. feine Pulver aus Kreide, Schwerspat, Kieselsäure, Glas, Ruß, Titandioxid oder auch Farbpigmente, welche gleichzeitig die Lichtdurchlässigkeit und Farbe des Polyacrylats verändern. Solche Stoffe sind aus der Herstellung entsprechender PVC-Beläge bekannt.

Es hat sich ferner als vorteilhaft erwiesen, der Mischung noch 1-20 % Polyvinylacetatpulver, bezogen auf die eingesetzte Kunststoffmischung zuzufügen. Diese haben ähnliche Affinitäten zu den Weichmachern und gelieren daher zusammen mit den Methylmethacrylaten. Gleichzeitig wird jedoch die Verbindung mit den Füllstoffen verbessert.

Im Gegensatz zu Metallüberzügen aus Acrylatlacken, welche bei höheren Temperaturen über Zeiträume von 1/2 bis 2 Stunden eingebrannt werden können, muß bei der Herstellung der erfindungsgemäßen Bodenbelagsbahnen eine ausreichende Produktionsgeschwindigkeit gewährleistet sein. Verarbeitungszeiten von 5-15 Min., welche der üblichen Durchlaufzeit der Ware durch die Kneter, Mischer und Kalander entsprechen, können mit den erfindungsgemäßen Mischungen eingehalten werden. Die notwendigen Temperaturen liegen dabei je nach Art der Mischung und der Menge des Weichmachers bei etwa 100-200. Mischung und Vorplastifizierung erfolgen vorzugsweise bei Temperaturen von 100 - 140 °C, das Auswalzen bei 120 - 150 °C. Zum Doublizieren und Glätten der fertigen Bahnen sind Temperaturen von 130 -160 °C, vorzugsweise 140 - 150 °C, geeignet. Bei Mischungen mit hohem Anteil an Füllstoffen und geringem Anteil an Weichmachern sowie bei hohen Verarbeitungsgeschwindigkeiten kann es jedoch erforderlich sein, diese Temperaturen bis beispielsweise 200 °C zu erhöhen. Die wieder abgekühlten Bahnen erweisen sich anschließend als trocken und nicht mehr klebend, so daß sie unmittelbar nach Herstellung konfektioniert und verpackt werden können.

In den folgenden Beispielen ist die Erfindung näher erläutert, ohne daß sie dadurch beschränkt werden soll.

## Beispiel 1

Rezepturen für Dryblends auf Basis Polymethylmethacrylat

3

| Beispiel 1 | |
|---|---|
| Rezepturen für Dryblends auf Basis Polymethylmethacrylat | |
| Polymethylmethacrylat Emulsionspolymerisat Korngröße 100µm | 350 kg |
| Polymethylmethacrylat Suspensionspolymerisat Korngröße 50-200 µm | 150 kg |
| Benzyloctylphthalat | 250 kg |
| Calciumcarbonat | 250 kg |

## Beispiel 2

Herstellung eines Kalanderbelages auf Basis von Acrylaten

Es wird eine Kalandermischung (Kalander Dryblend) in einem mit einem Rührer versehenen Fluidmischer hergestellt, wie sie auch bei der Produktion von PVC-Fußbodenbelägen Verwendung findet.

Das Acrylat Dryblend gemäß Beispiel 1 wird in einem Kneter bei ca. 120° C homogen gemischt, dabei vorplastifiziert und auf Mischwalzwerke aufgetragen.

Von den Mischwalzwerken wird nach einer Mischzeit von 5 Min. bei mindestens 120° C das Mischgut auf einen Kalander übertragen und eine 1 mm dicke Folie gezogen. Diese Folie ist nur unzureichend geglättet.

Um einen z.B. 2 mm dicken Bodenbelag zu produzieren, werden, wie bei der Doublierung von PVC-Folien, zwei 1 mm dicke Bahnen der geformten Folien auf ein Textilmitläuferband übereinander gelegt und einer kontinuierlichen Presse,z. B. einer Auma-Maschine, zugeführt, wo sie unter einem Druck von 50 N/cm$^2$ und einer Temperatur von ungefähr 140° C verbunden werden. Dabei erhält man ein ca.2 mm dickes Flächengebilde.

Abschließend wird das Flächengebilde bei ca. 150° C getempert, langsam abgekühlt und konfektioniert.

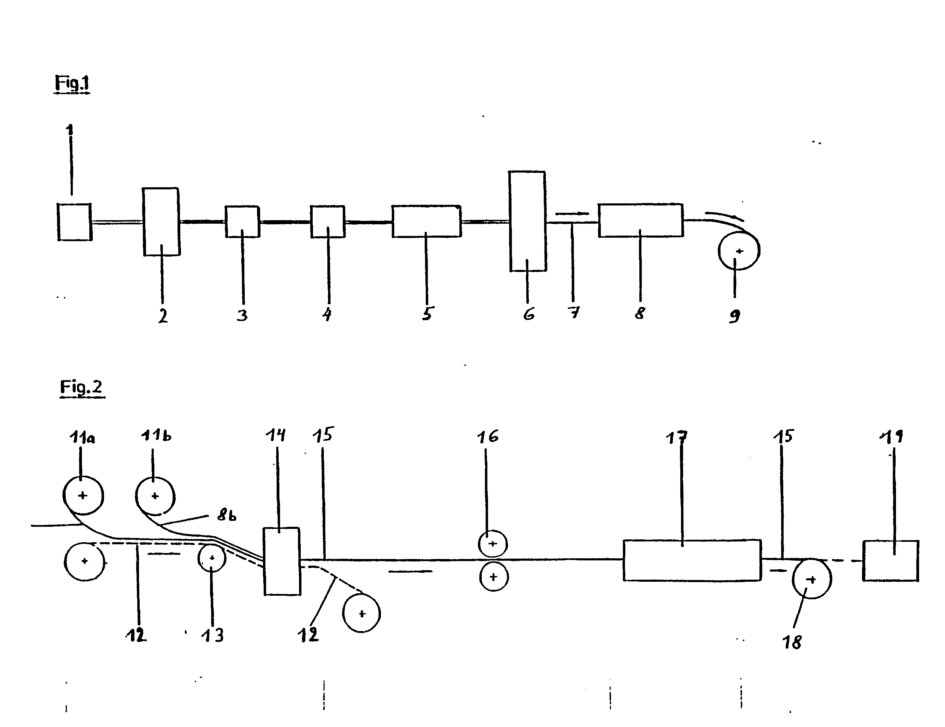

Fig. 1 zeigt dabei die Vorrichtung für die Herstellung der Einzelfolie.

In der Fig. 1 ist mit 1 der Fluidmischer bezeichnet, in dem das Weich-Acrylat-Dryblend homogenisiert wird; mit 3 und 4 zwei Mischwalzwerke, in denen die Mischung gemischt wird. 5 bedeutet einen Warmgranulator, über den das Mischgut auf einen Kalander 6 übertragen wird und 7 die auf den Kalander gezogene Einzelfolie.

Mit 8 ist eine Heizstrecke bezeichnet, mittels derer die Einzelfolie 7 geglättet wird, bevor sie auf den Wickler 9 aufgewickelt wird.

Fig. 2 zeigt eine Vorrichtung für die Doublierung der Einzelfolien. Dabei bedeuten 11a und 1lb zwei Folienabwickler, von denen zwei Einzelfolien 8a und 8b abgewickelt und mit Hilfe eines Textilmitläuferbandes 12 über eine beheizte Walze 13 geführt und vorgewärmt werden.

Mit 14 ist dann die Doubliermaschine bezeichnet, wo die zugeführten Einzelfolien 8a und 8b unter Einwirkung von Druck und Wärme zu einem Flächengebilde verbunden werden.

16 bedeutet eine beheizte Prägeeinrichtung, bestehend aus zwei Walzen, in der das Flächengebilde 15 geprägt wird.

17 stellt eine Temperanlage dar, in der das Flächengebilde 15 tempert und schließlich erhält die Aufwickelvorrichtung 18 das fertige Flächengebilde oder es wird in der Stanze 19 zu Fliesen gestanzt.

Die nach dem erfindungsgemäßen Verfahren hergestellten Beläge in Form eines Flächengebildes können als Fußbodenbeläge, Wandbeläge, Beläge auf überdachten Terassen, Fluren, Treppen usw. verwendet werden.

## Bezugszeichenliste

1 Fluidmischer
2 Kneter
3,4 Mischwalzwerke
5 Warmgranulator

6 Kalander

7 Einzelfolie

8 Heizstrecke

8a,8b Einzelfolien

9 Wickler

11a,11b Folienabwickler

12 Textilmitläuferband

13 beheizte Walze

14 Doubliermaschine

15 Flächengebilde

16 beheizte Prägeeinrichtung

17 Temperanlage

18 Aufwickelvorrichtung

**Ansprüche**

1. Kalandrierte Bodenbeläge aus polymeren Kunststoffen, Weichmachern und gegebenenfalls Hilfsstoffen, dadurch gekennzeichnet, daß sie aus einer Mischung von
a) 100 Teilen Emulsionspolymerisat aus Methylmethacrylat,
b) 0-150 Teilen Suspensionspolymerisat aus Methylmethacrylat,
c) 20-60 % von einem oder mehreren geeigneten Weichmachern und
d) 0 - 100 % an sich bekannten Hilfsstoffen
bestehen, wobei die Mengen von c) und d) jeweils auf die Gesamtmenge von a) und b) bezogen sind.

2. Bodenbelag gemäß Anspruch 1, dadurch gekennzeichnet, daß ein oder mehrere Weichmacher aus der Gruppe niedere Alkylphthalate, Alkoxialkylphthalate, Benzyl-alkylphthalate, Alkylphosphate, aromatische Phosphate, Citronensäureester, Carbamidweichharze und Benzoesäureester enthalten sind.

3. Bodenbelag gemäß Anspruch 1 oder 2, dadurch gekennzeichnet, daß bis zu 50 % der Weichmacher aus vernetzbaren Methacrylsäureestern und einem Härter bestehen.

4. Bodenbeläge gemäß Anspruch 1-3, dadurch gekennzeichnet, daß als Hilfsstoffe inerte Füllstoffe, Farbstoffe, Bactericide, Antistatica etc. enthalten sind.

5. Bodenbeläge gemäß Anspruch 1-4 dadurch gekennzeichnet, daß sie eine Schichtdicke von 1-5 mm besitzen.

6. Bodenbeläge gemäß Anspruch 1-5, dadurch gekennzeichnet, daß zusätzlich 1-20 % Polyvinylacetat bezogen auf den Kunststoffanteil enthalten ist.

7. Verfahren zur Herstellung von Bodenbelägen gemäß Anspruch 1 bis 6, dadurch gekennzeichnet, daß die festen und flüsigen Komponenten in einem Mischer zu einem Dryblend bzw. in einem Kneter vermischt und vorplastiziert und zwischen Walzen zu einer Bahn entsprechender Dicke ausgewalzt werden, wobei je nach Art der Mischung und Menge der Weichmacher Temperaturen von 120 - 200 °C angewandt werden.

8. Verfahren zur Herstellung von Bodenbelägen gemäß Anspruch 1-7, dadurch gekennzeichnet, daß die erhaltenen Bahnen über Kalander bzw. eine kontinuierliche Presse geglättet bzw. zu dickeren homogenen oder heterogenen Fußbodenbelägen doubliert werden.

EP 0 381 950 A2

Fig.1

1

2   3   4   5   6   7   8   9

Fig.2

11a   11b   14   15   16   17   15   19

8b

12   13   12   18